# EUROPEAN PATENT APPLICATION

(11) **EP 0 887 142 A1**
(43) Date of publication of application: **30.12.1998**
(21) Application number: 98301435.8
(22) Date of filing: 26.02.1998
(51) Int. Cl.: B23K 11/10, B23K 31/02

(54) **An apparatus for joining two ring-shaped members**

(30) Priority: 26.06.1997 KR 9727518; 26.06.1997 KR 9727520
(71) Applicant: Samsung Electronics Co., Ltd., Suwon City, Kyungki-do (KR)
(72) Inventor: Kim, Jin-soo, Suwon-city, Kyungki-do (KR)
(74) Representative: Geary, Stuart Lloyd

(57) **Abstract**

An apparatus for joining two ring-shaped members (12,13) in stacked relation is disclosed and comprises a jig (28), pressing means (50), drive means (60) and spot welding means (70). The pressing means (50) is configured for urging a first ring-shaped member (12) into contact with a second ring-shaped member (13) held by the jig (28) so that they can be rotated together by the drive means (60) and the spot welding means (70) is configured for tack-welding ring-shaped members (12,13) being rotated by the drive means (60). The apparatus is specifically intended for use in the manufacture of a device for counteracting the imbalance caused by the uneven distribution of laundry in a washing machine drum.

## Description

The present invention relates to an apparatus for joining two ring-shaped members in stacked relation.

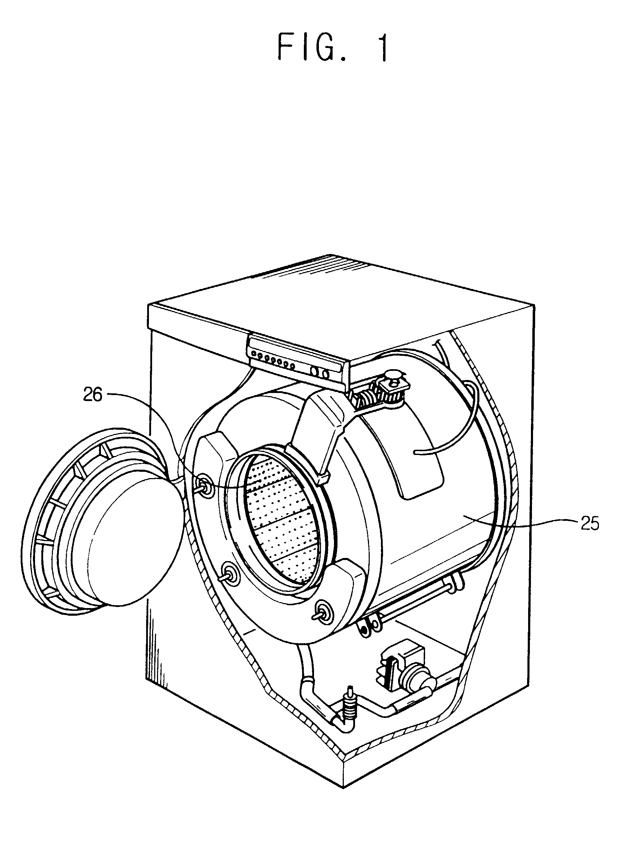

A conventional drum type washing machine is illustrated in Figure 1 and includes a drum 26 for receiving laundry to be washed, rotatably mounted within a tub 25.

The drum 26 rotates at a low speed during a washing cycle, and at a higher speed during a spin-drying cycle. When the drum 26 rotates at a high speed, vibration occurs due to the uneven distribution of laundry within the drum 26. The washing machine is therefore provided with a device to counterbalance the uneven load and reduce vibration of the drum 26 and the tub 25.

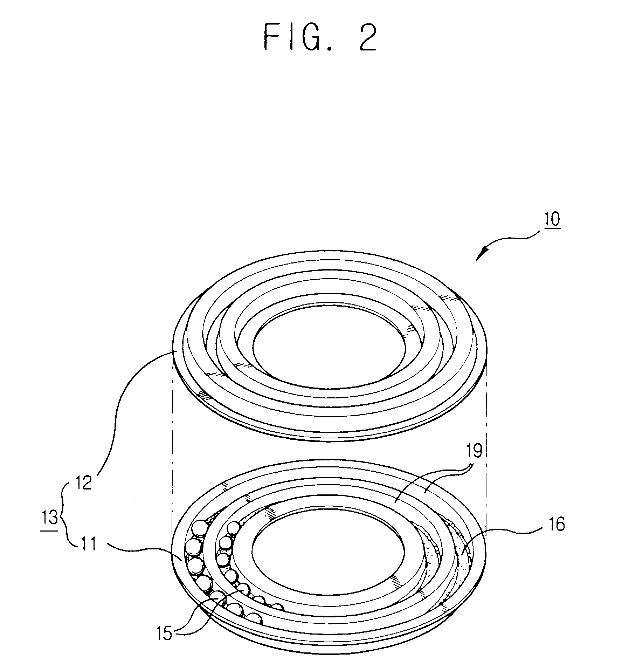

A typical counterbalancing device is a ball balancer of the type illustrated in Figure 2.

A ball balancer 10 generally includes a housing 13 comprising a lower portion 11 provided with annular races 19 around its circumference 26 and an annular cover 12 which fits onto and covers the lower portion 11. The races 19 accommodate a plurality of counterbalancing balls 15 which are free to move along the races 19 during rotation of the drum 26 to a position in which the uneven distribution of laundry within the drum 26 is counterbalanced by the weight of the balls 15. Therefore, vibration of the drum 26 and tub 25 is damped. To ensure that the balls 15 move smoothly in the races 19, and quickly counteract any imbalance, the races 19 are partially filled with oil or other lubricant.

When the balancer 10 is manufactured, the annular cover 12 of the housing 13 is seam welded to the lower portion 11 of the housing 13 along its inner and outer circumferential edges which make contact with the lower portion 11 of the housing 13. A disadvantage with this arrangement is that the position of the annular cover 12 can move relative to the lower portion 11 of the housing 13 during the seam welding process, resulting in a defective weld and poor alignment between the lower portion 11 and the annular cover 12 of the housing 13.

It is an object of the present invention to overcome or substantially alleviate the aforementioned disadvantage.

An apparatus for joining two ring-shaped members in stacked relation in accordance with the present invention comprises a jig, pressing means, drive means and spot welding means, wherein the pressing means is configured for urging a first ring-shaped member into contact with a second ring-shaped member held by the jig so that they can be rotated together by the drive means and the spot welding means is configured for tack-welding ring-shaped members being rotated by the drive means.

Preferably, the pressing means comprises a plurality of rollers depending from a carriage movable towards the jig for urging a first ring-shaped member into contact with a second ring-shaped member held by the jig.

In a preferred embodiment, the drive means is a motor coupled to a roller.

The tack-welding means preferably comprises a welding electrode.

Preferably, the welding electrode is movable towards the jig in a direction parallel to an axis of rotation of first and second ring-shaped, diven by the drive means, to carry out a tack-weld.

Conveniently, the jig, the pressing means and the drive means are mounted on a common frame. The frame is preferably movable relative to the tack-welding means.

An embodiment of the present invention will now be described, by way of example only, with reference to the accompanying drawings, in which:-
Figure 1 is a perspective view of a conventional drum type washing machine;
Figure 2 is an exploded perspective view of a balancer for damping vibration caused by an uneven distribution of laundry in a drum of a washing machine;
Figure 3 is a perspective view of a tack welding apparatus according to an embodiment of the present invention; and

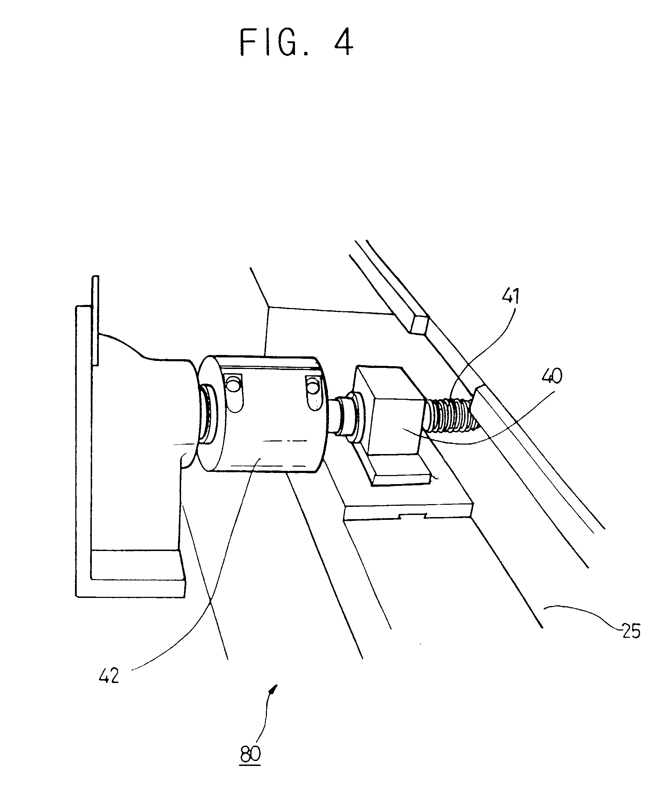

Figure 4 is a perspective view of part of the movable frame portion of the apparatus shown in Figure 3.

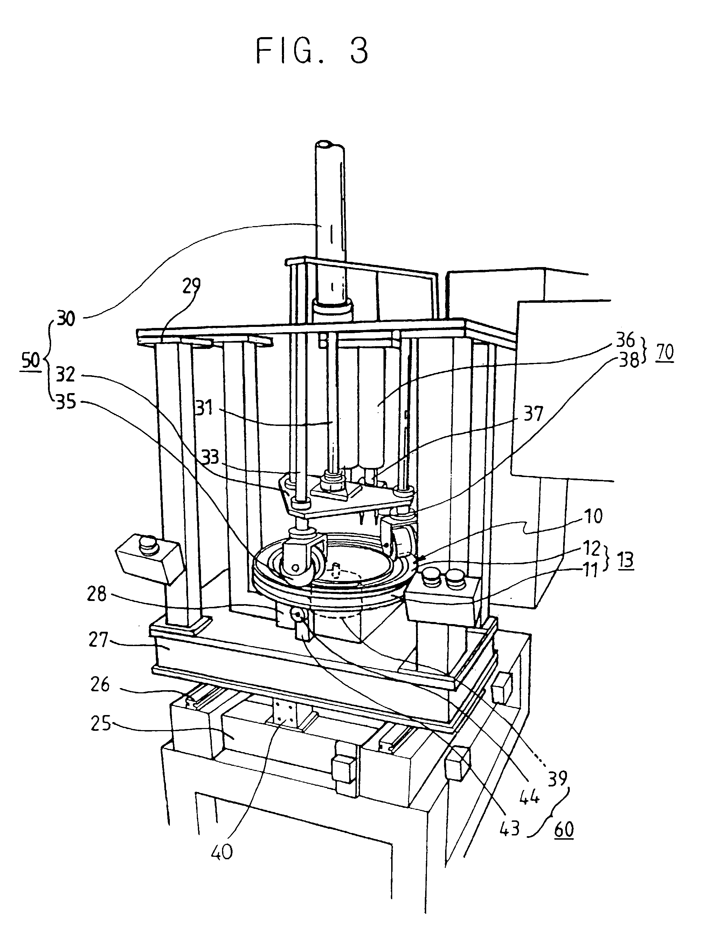

A tack welding apparatus is illustrated in Figure 3 and comprises a loading portion 50 for pressing the annular cover 12 into contact with the lower portion 11 of the housing 13 to hold it in position, a turntable portion 60 for rotating the balancer housing 13, a tack welding portion 70 for tack welding the annular cover 12 to the lower portion 11 of the housing 13 and a movable frame portion 80 for moving the balancer housing 13 in a horizontal direction.

The loading portion 50 comprises a cylinder 30, having a piston 31, mounted on an upper frame 29. The piston 31 carries a plate 32 on which rollers 35 are rotatably mounted on a bracket 34. The apparatus includes a lower frame having a table 27 to which a jig 28 for supporting the balancer housing 13 is fixed. A plurality of guide bars 33 mounted on the upper frame 29 guide the plate 32 as it is moved by the piston 31. When the plate 32 is moved down by the piston 31, the rollers 35 contact the cover 12 and push it downwardly into contact with the lower portion 11 of the housing 13 of the counterbalance device and hold it firmly in position.

The turntable portion for rotating the balancer housing 13 includes a pair of support members 43 each having a support roller 44 for supporting the balancer housing 13 on the jig 28 and a motor 39 for driving the rollers 44 to rotate the balancer housing 13. The rollers 35 of the loading portion 50 which press the cover 12 downwardly against the lower portion 11 of the housing 13 rotate as the balancer housing 13 rotates. Therefore, the motor 39 drives the rollers 44 to rotate the housing 13 and the cover 12 is pressed downwardly against the lower portion 11 of the housing 13 by the loading portion 50.

The tack-welding portion 70 comprises a welding cylinder 36 having a welding portion 37 with a plurality of welding electrodes 38 attached to its lower end. Operation of the welding cylinder 36 causes the welding electrodes 38 to move towards or away from the housing 13 fixed on the jig 28.

The movable frame portion 80 comprises a pair of guide rails 26 mounted on the lower frame 25 to which the table 27 is slidably mounted. A guide member 40 is mounted beneath the table and has a threaded hole through which a threaded shaft 41 of a motor 42 passes. Operation of the motor 42 causes the shaft 41 to rotate to move the table along the guide rails 26.

The operation of the apparatus will now be described. Firstly, the counterbalancing balls 15 are placed in the races 19 in the lower portion 11 of the housing 13, which is then covered by the cover 12. The housing 13 consisting of the lower portion 11 containing the balls 15 and the annular cover 12 is mounted on the jig 28 so that it is rotatably supported by the support rollers 44.

Operation of the cylinder 30 of the loading portion 50 causes the plate 32 to move downwardly so that the rollers 35 engage the annular cover 12 and press it against the lower portion 11 of the balancer housing 13.

The welding portion 70 now spot welds the outer edge of the cover 12 to the lower portion 11 at a number of spaced circumferential locations by operating the welding cylinder 36 to move the welding electrodes 38 downwardly, and into contact with the outer contact edge between the cover 12 and the lower portion 11. When one tack or spot weld has been completed, the welding cylinder 36 moves the welding electrodes 38 away from the housing 13 and motor 39 drives the roller 44 to rotate the balancer housing 13 by 120 degrees to a new position. Rotation of the housing 13 is guided by the rollers 35 of the loading portion 50. When the new position has been reached, the cover 12 is again tack-welded by the welding electrodes 38. The process is repeated so that the cover 12 is spot welded to the lower portion 11 in three spaced circumferential locations on the outer edge of the cover 12.

Once the aforementioned welding step has been completed, the movable frame portion 80 moves the balancer housing 13 in a horizontal direction to position the inner edge of the cover 12 below the welding cylinder 36 so that tack welding of the inner edge of the cover 12 to the lower portion 11 can be carried out. The balancer housing 13 moves in response to operation of the motor 42 which drives the screw shaft 41 which passes through guide member 40 fixed to the lower frame 25 to move the table 27 along the guide rails 26. The above described operation is repeated to tack-weld the inner edge of the cover 12 to the lower portion 11 of the housing 13 at three locations spaced circumferentially by 120 degrees.

When tack-welding the cover 12 to the lower portion 11 has been completed, the cylinder 30 lifts the plate 32 away from the housing 13 to release it. The housing 13 can then be transferred to the next processing step in which the cover 12 can be seam welded to the lower portion 11 without relative movement between the cover 12 and the lower portion 11 occurring.

Although the present invention has been described and illustrated in detail, it is clearly understood that the same is by way of illustration and example only and is not to be taken by way of limitation, wherein the scope of the present invention is limited only by the terms of the appended claims.

## Claims

1. An apparatus for joining two ring-shaped members (12,13) in stacked relation comprising a jig (28), pressing means (50), drive means (60) and spot welding means (70), wherein the pressing means (50) is configured for urging a first ring-shaped member (12) into contact with a second ring-shaped member (13) held by the jig (28) so that they can be rotated together by the drive means (60) and the spot welding means (70) is configured for tack-welding ring-shaped members (12,13) being rotated by the drive means (60).

2. An apparatus according to claim 1, wherein the pressing means (50) comprises a plurality of rollers (35) depending from a carriage (32) movable towards the jig (28) for urging a first ring-shaped member (12) into contact with a second ring shaped member (13) held by the jig (28).

3. An apparatus according to claim 2, wherein the carriage (32) is movable towards the jig (28) on a guide shaft (33).

4. An apparatus according to claim 2 or 3, wherein the carriage (32) is connected to a pneumatic or hydraulic cylinder (30) for moving the carriage (32).

5. An apparatus according to any preceding claim, wherein the drive means (60) comprises a motor (39) coupled to a roller (44).

6. An apparatus according to any preceding claim, wherein the tack-welding means (70) comprises a welding electrode (38).

7. An apparatus according to any preceding claim, wherein the welding electrode (38) is movable towards the jig (28) in a direction parallel to an axis of rotation of ring-shaped members (12,13), driven by the drive means, to carry out a tack-weld.

8. An apparatus according to any preceding claim, wherein the jig (28), the pressing means (50) and the drive means (60) are mounted on a common frame (29).

9. An apparatus according to claim 8, comprising means (80) for moving the frame (29) relative to the spot-welding means (70).

10. An apparatus according to claim 9, wherein the means for moving the frame (29) includes a fixed motor (42) having a threaded shaft (41) received in a corresponding threaded hole in a guide block (40) attached to the frame (29), rotation of the shaft (41) generating a screwing action to move the guide block (40) and frame (29) along the shaft (41).

11. An apparatus according to claim 9 or 10, wherein movement of the frame (29) is guided by guide rails (26).

12. An apparatus for tack-welding a balancer used in a drum type washing machine, said balancer having a balancer housing comprised of a lower housing for forming an annular race at a dehydration tub and an upper cover for covering said lower housing, and a plurality of balls accommodated in said race, said balancer for damping vibrations of said dehydration tub, said apparatus comprising:
a means for pushing said balancer housing loaded on a jig so that said upper cover comes in close contact with said lower housing containing said balls;
a means for rotating said balancer housing pushed by said pushing means; and a means for tack-welding a contact part of said lower housing and said upper cover while said balancer housing is rotated by said rotating means.

13. The tack welding apparatus for a balancer as claimed in claim 2, wherein said tack-welding means performs spot welding on the contact part.

14. The tack welding apparatus for a balancer as claimed in claim 12, wherein said pushing means comprises:
a pushing cylinder having a pushing rod;
a pushing plate being installed at an end of said pushing rod, said pushing plate being moved by said pushing cylinder; and
pushing rollers being rotatably installed at said pushing plate, said pushing rollers for pushing downward said balancer housing when said pushing plate moves.

15. The tack welding apparatus for a balancer as claimed in claim 14, wherein said tack-welding means comprises:
a welding electrode; and
a welding cylinder for moving said welding electrode up and down above the contact part of said balancer housing fixed by said pushing means.

16. The tack welding apparatus for a balancer as claimed in claim 15, wherein said rotating means comprises:
supporting rollers being rotatably mounted on said jig, said supporting rollers for supporting said balancer housing; and
a rotation motor for rotating said jig while said balancer housing is supported by said supporting rollers.

17. The tack welding apparatus for a balancer as claimed in claim 12, further comprising a means for moving said balancer housing horizontally so that another contact part of said balancer housing is tack-welded by said tack-welding means.

18. The tack welding apparatus for a balancer as claimed in claim 17, wherein said moving means comprises:
a guide rail for guiding a horizontal movement of said jig;
a movement motor for moving said jig along said guide rail; and
a screw shaft for converting a rotation of said movement motor to the horizontal movement of said jig.
